# EUROPÄISCHE PATENTSCHRIFT

(11) **EP 3 976 411 B1**
(45) Veröffentlichungstag und Bekanntmachung des Hinweises auf die Patenterteilung: **24.01.2024**
(21) Anmeldenummer: 20720758.0
(22) Anmeldetag: 09.04.2020
(51) Int. Cl.: B60K 35/00, B60K 37/00, G01D 11/28, G01D 7/00, B60K 37/02, B60K 37/06

(54) **VERFAHREN ZUR GRAFISCHEN KONFIGURIERUNG EINES ANZEIGEINSTRUMENTES IN EINEM KRAFTFAHRZEUG UND KRAFTFAHRZEUG ZUR DURCHFÜHRUNG DES VERFAHRENS**
METHOD FOR GRAPHICALLY CONFIGURING A DISPLAY INSTRUMENT IN A MOTOR VEHICLE AND MOTOR VEHICLE FOR CARRYING OUT SAID METHOD
PROCÉDÉ DE CONFIGURATION GRAPHIQUE D'UN INSTRUMENT D'AFFICHAGE DANS UN VÉHICULE À MOTEUR, ET VÉHICULE À MOTEUR POUR LA MISE EN OEUVRE DU PROCÉDÉ

(30) Priorität: 24.05.2019 DE 102019207682
(43) Veröffentlichungstag der Anmeldung: 06.04.2022
(73) Patentinhaber: VOLKSWAGEN AKTIENGESELLSCHAFT, 38440 Wolfsburg (DE)
(72) Erfinder: KÜPPER, Bernt, 38110 Braunschweig (DE); STRÖHLEIN, Tobias, 38110 Braunschweig (DE); BUSSE, Frank, 38162 Destedt (DE)
(86) Internationale Anmeldenummer: PCT/EP2020/060222
(87) Internationale Veröffentlichungsnummer: WO 2020/239312

(56) Entgegenhaltungen:
- EP-A1- 2 930 049
- WO-A1-2015/131921
- DE-A1-102006 037 154
- DE-A1-102009 040 269
- DE-A1-102017 000 592

## Beschreibung

Die Erfindung betrifft ein Verfahren zur grafischen Konfigurierung eines Anzeigeinstrumentes in einem Kraftfahrzeug mit den Merkmalen vom Oberbegriff des Patentanspruchs 1. Die Erfindung betrifft auch ein Kraftfahrzeug zur Durchführung des erfindungsgemäßen Verfahrens.

Ein Verfahren mit den Merkmalen vom Oberbegriff des Patentanspruchs ist, ist aus der EP 2 190 686 B1 bekannt. Konkret wird in dieser Patentschrift ein als Kombiinstrument ausgebildetes Anzeigeinstrument vorgestellt, mit einem ersten Anzeigebereich (Interaktionsbereich), in dem auswählbare Informationen bezüglich Fahrzeugfunktionen und/oder Assistenzfunktionen sowie Kontrollleuchten (Temp., Reifendruck etc.) dargestellt werden und der einen interaktiven Auswahlbereich aufweist. Der Auswahlbereich umfasst mehrere Symbole, mit denen unterschiedliche Funktionen abrufbar sind. Ferner ist ein Eingabemittel vorhanden, welches für eine Auswahl der in dem Interaktionsbereich angezeigten Informationen ausgebildet ist und einen Dreh-Drück-Knopf umfasst. Links- und rechtsseitig vom Interaktionsbereich sind fest vorgegebene Ablagebereiche vorhanden und dazu ausgebildet, ausgewählte Informationen darzustellen. Ein Verteiler, der Bestandteil des Eingabemittels ist, dient dazu, die im Interaktionsbereich ausgewählten Informationen in einen der Ablagebereiche zu verschieben.

Wenngleich die in der Patentschrift vorgestellte Lösung bereits einen hohen Komfort für einen Fahrzeugführer bietet, sind diesem durch die vorgegebene Strukturierung in den Interaktionsbereich und die Ablagebereiche hinsichtlich seiner Flexibilität bei der grafischen Konfigurierung des Anzeigeinstrumentes Grenzen gesetzt.

Die DE 10 2009 040 269 A1 beschreibt eine Bedienvorrichtung und ein Verfahren zum Bereitstellen einer Bedienvorrichtung zum Navigieren in Listen. Konkret wird bei dem Verfahren mittels Betätigung einer als Kreuzwippschalter ausgebildeten Eingabeeinrichtung eine Informationsanzeige auf einer Anzeigefläche gesteuert. Die anzeigbaren Informationen umfassen mehrere Listen mit jeweils mehreren Listeneinträgen. Zumindest eine Teilmenge der zu den Listen gehörenden Listeneinträge ist auf der Anzeigefäche anzeigbar. Zum Anzeigen eines Listeneintrags wird dieser durch einen ersten Betätigungsvorgang mittels der Eingabeeinrichtung markiert. Nach Ablauf eines Zeitinteralls, in welchem der Listeneintrag fortwährend markiert war, wird dieser automatisch ausgewählt und auf der Anzeigefläche zentral angezeigt. Bei bestimmten Listen, bei denen die Listeneinträge nicht so schnell erfassbar sind, ist zur Auswahl eines markierten Listeneintrags noch eine weitere Betätigungseingabe mittels der Eingabeeinrichtung notwendig.

Aus der DE 10 2006 037154 A1 ist ein Verfahren zum Betreiben eines Navigationsgerätes bekannt, bei dem eine Position eines Fingers eines Nutzers relativ zu einer Anzeigefläche einer Anzeigevorrichtung ermittelt wird. Eine Darstellung von Navigationsinformationen, insbesondere Informationen in Kartendarstellungen, erfolgt in Abhängigkeit von der ermittelten Position des Körperteils.

Der DE 10 2017 000592 A1 ist eine Anzeigevorrichtung zur Darstellung einer aktuellen Drehzahl eines Kraftfahrzeugs zu entnehmen. Diese umfasst eine Anzeigefläche und eine mit der Anzeigefläche gekoppelte Steuereinrichtung zum Steuern einer Anzeige von Informationen auf der Anzeigefläche. Die Steuereinrichtung ist ausgebildet, die Darstellung der Drehzahl auf der Anzeigefläche in Abhängigkeit von einem Betriebszustand eines Nebenantriebs des Kraftfahrzeugs zu verändern.

Die WO 2015 / 131921 A1 offenbart ein Verfahren zum Bereitstellen einer graphischen Benutzerschnittstelle in einem Kraftfahrzeug, bei dem graphische Objekte, die mit bedienbaren Funktionen assoziiert sind, bedarfsweise auf einer Anzeigefläche einer Anzeigevorrichtung angezeigt werden können. Dabei ist die Anzeigevorrichtung in eine Instrumententafel vollständig oder teilweise absenkbar. Befindet sich die Anzeigevorrichtung betriebsbedingt in einem teilweise abgesenkten Zustand, wird nur noch ein Teil der grafischen Objekte auf einem verbleibenden, sichtbaren Teil der Anzeigefläche dargestellt. Um einem Bediener dennoch die Möglichkeit zu geben, auch nicht mehr sichtbare, grafische Objekte einsehen und bedienen zu können, werden Bewegungen der Hand des Bedieners über einen Detektionsbereich erfasst. Über Wischgesten kann er einzelne, nicht sichtbare grafische Objekte oder eine ganze Gruppe von nicht sichtbaren grafischen Objekten in den verbleibenden, sichtbaren Teil der Anzeigefläche zurückholen.

Schließlich wird in der EP 2 930 049 A1 ein Verfahren zu Anpassung einer Ansicht auf einer berührungsempfindlichen Oberfläche eines Bildschirms eines PKWs beschrieben. Konkret wird beschrieben, wie ein sogenannter Homescreen angepasst werden kann. Der Homescreen zeigt auf der Oberfläche verschiedene Kacheln an, denen verschiedene Inhalte (Funktionen) zugewiesen sind bzw. werden können. Durch eine vertikale Wischgeste können Bedienflächen von unten in den Bildschirm hineinbewegt oder wieder herausbewegt werden. Durch Berührung von Anfassern innerhalb der Bedienflächen können Unterfunktionen der Bedienflächen ausgeklappt oder eingeklappt werden. Unterfunktionen können durch eine Drag & Drop-Geste einer bestimmten Kachel zugeordnet werden. Die Bedienflächen können ggf. mit den angezeigten Unterfunktionen durch eine horizontale Wischgeste gescrollt werden. Es ist auch möglich, den einer Kachel zugewiesenen Funktionsumfang durch Verschieben auf einen Papierkorb zu löschen oder eine markierte Kachel durch Betätigung des Papierkorbs vollständig zu löschen. Ein detaillierte Funktionsumfang einer Kachel kann aufgerufen werden, wobei auch ein bestimmter Anzeigeplatz von benachbarten, nicht funktionsbelegten Kacheln zur späteren Anzeige mit einbezogen werden kann.

Der vorliegenden Erfindung liegt die Aufgabe zu Grunde, ein Verfahren zur grafischen Konfigurierung eines Anzeigeinstrumentes bereitzustellen, welches eine noch flexiblere Darstellung von Informationen auf einem Anzeigeinstrument eines Kraftfahrzeugs ermöglicht und welches sicherstellt, dass ein für besonders wichtig erachtetes Informationselement für einen Fahrzeugführer (Benutzer) stets auf dem Anzeigeinstrument dargestellt wird. Des Weiteren kann es als Aufgabe der Erfindung angesehen werden, ein geeignetes Kraftfahrzeug zur Durchführung des Verfahrens bereitzustellen.

Vorliegende Aufgaben werden durch ein Verfahren mit den Merkmalen von Patentanspruch 1 und durch ein Kraftfahrzeug mit den Merkmalen von Patentanspruch 5 gelöst. Vorteilhafte Ausbildungen beziehungsweise Weiterbildungen der Erfindung sind den jeweils abhängigen Ansprüchen zu entnehmen.

Die Erfindung geht zunächst von einem Verfahren zur grafischen Konfigurierung eines Anzeigeinstrumentes in einem Kraftfahrzeug aus, wobei benutzerseitig wenigstens ein auf einer Anzeigefläche des Anzeigeinstruments darzustellendes Informationselement mittels einer Eingabe- und Anzeigevorrichtung aus einem Vorrat von Informationselementen ausgewählt und auf der Anzeigefläche des Anzeigeinstrumentes aufgrund der Auswahl dargestellt wird.

Unter einem Informationselement im Sinne der Erfindung soll ein solches grafisch darstellbares Element verstanden werden, welches einem Fahrzeugführer Informationen über Betriebs- und/oder Fahrzustände des Kraftfahrzeugs und seiner wichtigen Komponenten geben kann. Derartige Zustände können beispielsweise eine Fahrgeschwindigkeit, eine Motordrehzahl, ein Navigationszustand, eine Lautstärke einer Audioanlage, ein gerade abgespielter Musiktitel, eine Temperatur und/oder ein vorhandener Kontakt aus einem elektronischen Adressbuch sein. Die Aufzählung ist rein beispielshaft und bei Weitem nicht als abschließend zu betrachten. Das Informationselement kann dabei vorzugsweise in Form eines Piktogramms, eines Symbols, einer Zahl, einer Kartendarstellung oder auch in Form von Text dargestellt werden. Auch Mischformen davon sind denkbar.

Es wird ferner vorgeschlagen, dass nach der Auswahl des wenigstens einen Informationselementes dessen auf der Anzeigefläche einzunehmende Darstellungsposition, dessen Darstellungsgröße und/oder dessen Darstellungsausrichtung benutzerseitig frei festgelegt werden.

Durch ein derartiges Verfahren kann ein Höchstmaß an Darstellungsflexibilität auf einem Anzeigeinstrument in einem Kraftfahrzeug realisiert werden.

Gemäß der Erfindung wird kraftfahrzeugseitig (also durch eine im Kraftfahrzeug hinterlegte Steuerlogik) überprüft, ob wenigstens ein bestimmtes, kraftfahrzeugseitig festgelegtes Informationselement zur Darstellung ausgewählt wurde. Bei einer fehlenden Auswahl des bestimmten Informationselementes wird auf die Notwendigkeit zur Auswahl des bestimmten Informationselementes hingewiesen. Eine Darstellung der ausgewählten Informationselemente erfolgt erst dann, wenn zumindest auch eine Auswahl des bestimmten, festgelegten Informationselementes getroffen wurde.

Durch eine derartige Verfahrensweise kann es unterstützt werden, dass ein für besonders wichtig erachtetes Informationselement für einen Fahrzeugführer (Benutzer) stets auf dem Anzeigeinstrument dargestellt wird. Es kann damit also ausgeschlossen werden, dass ein solches Informationselement vom Fahrzeugführer bei der Konfigurierung seines Anzeigeinstrumentes übersehen oder gar willentlich ausgeschlossen wird.

In einer Ausbildung des Erfindungsgedankens wird zudem kraftfahrzeugseitig überprüft, ob eine benutzerseitig festgelegte Darstellungsgröße des bestimmten Informationselementes eine bestimmte, kraftfahrzeugseitig festgelegte Darstellungsgröße unterschreitet. Bei einer Unterschreitung der bestimmten Darstellungsgröße wird kraftfahrzeugseitig auf die Notwendigkeit zur Einhaltung zumindest der bestimmten Darstellungsgröße des Informationselementes hingewiesen.

Auch in diesem Fall erfolgt eine Darstellung der ausgewählten Informationselemente erst dann, wenn die benutzerseitig festgelegte Darstellungsgröße des bestimmten, kraftfahrzeugseitig festgelegten Informationselementes der bestimmten, kraftfahrzeugseitig festgelegten Darstellungsgröße entspricht oder größer als diese ist. Die Darstellungsgröße kann beispielsweise ein Durchmesser eines Rundinstrumentes oder eine Schriftgröße von alphanumerischen Zeichen sein.

Diese vorteilhafte Ausbildung des Verfahrens führt dazu, dass ein als wichtig erachtetes Informationselement auch stets in einer solchen Größe dargestellt wird, die nach allgemeiner Lebenserfahrung dazu ausreicht, dass diese auf dem Anzeigeinstrument durch einen Fahrzeugführer gut ablesbar ist.

Für den Fall, dass das Fahrzeug von verschiedenen Fahrern genutzt wird, lassen sich unterschiedliche, bevorzugte Bildschirmkonfigurationen speichern und abrufen, so dass der jeweilige Fahrer seine präferierte Bildschirmansicht nicht neu einstellen muss.

Denkbar ist beispielsweise, dass nach einer erfolgten Konfigurierung ein Benutzer gefragt wird, ob er die Konfiguration als sein Favorit abspeichern möchte. Bei der Abspeicherung kann die Konfiguration personifiziert werden, bspw. durch den Namen des Benutzers.

In einer Weiterbildung des Verfahrens ist es dann beispielsweise möglich, dass kraftfahrzeugseitig eine am Steuer des Kraftfahrzeugs sitzende Person erkannt wird und geprüft wird, ob der Person eine bestimmte, abgespeicherte Konfiguration des Anzeigeinstrumentes zugeordnet ist, wobei eine bestehende, der Person zugeordnete Konfiguration des Anzeigeinstrumentes als Anfangskonfiguration aktiviert wird. Diese kann vom Benutzer bei Bedarf in der beschriebenen Weise wieder verändert werden.

Die Erkennung der Person ist auf vielfältige Art und Weise möglich. Beispielsweise kann eine Person durch eine Innenraumkamera erfasst und mit gespeicherten Bildern von Benutzern eines Kraftfahrzeugs verglichen werden. Es ist auch denkbar, eine Person über Erkennung ihrer Stimme und/oder über ihren Fingerabdruck zu erkennen.

Wie anfangs erwähnt, betrifft die Erfindung auch ein Kraftfahrzeug zur Durchführung des erfindungsgemäßen Verfahrens. Ein derartiges Kraftfahrzeug umfasst ein Anzeigeinstrument mit einer Anzeigefläche, welche zur Anzeige wenigstens eines Informationselementes ausgebildet ist. Ferner umfasst das Kraftfahrzeug wenigstens eine Auswerte- und Steuereinrichtung und wenigstens eine Eingabe- und Anzeigeeinrichtung.

Die Auswerte- und Steuereinrichtung ist dazu ausgebildet, die Eingabe- und Anzeigeeinrichtung derart anzusteuern, dass auf einer der Eingabe- und Anzeigeeinrichtung zugeordneten Anzeigefläche ein Vorrat von Informationselementen angezeigt wird, aus dem ein oder mehrere Informationselemente auswählbar sind.

Die Auswerte- und Steuereinrichtung ist ferner dazu ausgebildet, eine Darstellung eines jeden ausgewählten Informationselementes auf der Anzeigefläche des Anzeigeinstrumentes zu veranlassen, wobei dessen Darstellungsposition, dessen Darstellungsgröße und/oder dessen Darstellungsausrichtung auf der Anzeigefläche mit Hilfe der Eingabe- und Anzeigeeinrichtung benutzerseitig frei festlegbar sind.

Ein derartig hergerichtetes Kraftfahrzeug eignet sich besonders gut zur Durchführung des erfindungsgemäßen Verfahrens.

Erfindungsgemäß wird vorgeschlagen, dass die Auswerte- und Steuereinrichtung beziehungsweise eine darin abgelegte Steuerlogik dazu ausgebildet ist, zu überprüfen, ob wenigstens ein bestimmtes, kraftfahrzeugseitig festgelegtes Informationselement ausgewählt wurde. Die Auswerte- und Steuereinrichtung ist ferner dazu ausgebildet, bei einer fehlenden Auswahl des bestimmten Informationselementes über eine Ausgabeeinrichtung die Ausgabe einer Fehlermeldung zu veranlassen, welche auf die Notwendigkeit zur Auswahl des bestimmten Informationselementes hinweist. Die Ausgabeeinrichtung kann zur grafischen und/oder akustischen Ausgabe einer solchen Fehlermeldung hergerichtet sein. Ferner ist die Auswerte- und Steuereinrichtung dazu ausgebildet, eine Darstellung von ausgewählten Informationselementen auf der Anzeigefläche nur dann zu veranlassen, wenn zumindest auch eine Auswahl des bestimmten, kraftfahrzeugseitig festgelegten Informationselementes erfolgte.

Auf diese Weise kann sichergestellt werden, dass ein Fahrzeugführer beziehungsweise ein Benutzer der Anzeigeeinrichtung nur dann eine Konfigurierung der Anzeigeeinrichtung durchführen bzw. abschließen kann, wenn er auch das bestimmte, fahrzeugseitig festgelegte Informationselement ausgewählt hat.

Eine Ausbildung des Erfindungsgedankens schlägt auch noch vor, dass die Auswerte- und Steuereinrichtung dazu ausgebildet ist, zu überprüfen, ob eine benutzerseitig festgelegte Darstellungsgröße des bestimmten, kraftfahrzeugseitig festgelegten Informationselementes eine bestimmte, kraftfahrzeugseitig festgelegte Darstellungsgröße unterschreitet. Die Auswerte- und Steuereinrichtung ist ferner dazu ausgebildet, bei einer Unterschreitung der bestimmten Darstellungsgröße eine Ausgabevorrichtung derart anzusteuern, dass diese auf die Notwendigkeit zur Einhaltung zumindest der bestimmten, kraftfahrzeugseitig festgelegten Darstellungsgröße des Informationselementes hinweist. Auch hier ist es zweckmäßig, wenn die Ausgabevorrichtung den Hinweis grafisch und/oder akustisch ausgeben kann.

Die Auswerte- und Steuereinrichtung ist ferner dazu ausgebildet, eine Darstellung der ausgewählten Informationselemente auf der Anzeigefläche nur dann zu veranlassen, wenn die benutzerseitig festgelegte Darstellungsgröße des bestimmten, kraftfahrzeugseitig festgelegten Informationselementes der bestimmten, kraftfahrzeugseitig festgelegten Darstellungsgröße entspricht oder größer als diese ist.

Somit ist durch eine derartige Weiterbildung auch sichergestellt, dass ein wichtiges Informationselement stets in einer gut lesbaren Mindestgröße auf der Anzeigefläche des Anzeigeinstrumentes dargestellt wird.

Zweckmäßigerweise wird als das bestimmte, fahrzeugseitig festgelegte Informationselement eine Geschwindigkeitsanzeige bestimmt. Die Geschwindigkeitsanzeige ist als eine besonders wichtige, wenn nicht als die wichtigste Information für einen Kraftfahrzeugführer anzusehen.

Schließlich wird gemäß einer weiteren Ausbildung der Erfindung vorgeschlagen, dass das Anzeigeinstrument als in einer Instrumententafel angeordnetes Kombiinstrument ausgebildet ist.

Eine derartige Weiterbildung führt dazu, dass die vom Fahrzeugführer ausgewählten Informationselemente während der Fahrt in seinem primären Sichtbereich liegen und somit ohne nennenswerte Ablenkung vom Fahrgeschehen für ihn gut sichtbar sind.

Bevorzugte Ausführungsbeispiele der Erfindung sind in den Figuren dargestellt und werden anhand der Figuren in der nachfolgenden Beschreibung näher erläutert. Dadurch werden auch noch weitere Vorteile der Erfindung deutlich. Gleiche Bezugszeichen, auch in unterschiedlichen Figuren, beziehen sich auf gleiche, vergleichbare oder funktional gleiche Bauteile. Dabei werden entsprechende oder vergleichbare Eigenschaften und Vorteile erreicht, auch wenn eine wiederholte Beschreibung oder Bezugnahme darauf nicht erfolgt. Die Figuren sind nicht oder zumindest nicht immer maßstabsgetreu. In manchen Figuren können Proportionen oder Abstände übertrieben dargestellt sein, um Merkmale eines Ausführungsbeispiels deutlicher hervorheben zu können.

Es zeigen, jeweils schematisch
- Fig. 1: die Darstellung eines zur Durchführung des Verfahrens hergerichteten Kraftfahrzeugs von innen,
- Fig. 2: eine schematische Signalbilddarstellung zur Erläuterung des Verfahrens, in einem ersten Verfahrenszustand,
- Fig. 3 bis 9: Signalbilddarstellungen gemäß Signalbilddarstellung der Fig. 2, jedoch in weiteren Betriebszuständen und
- Fig. 10: eine Darstellung der Eingabe- und Anzeigeeinrichtung zur grafischen Konfigurierung des Anzeigeinstrumentes, in Alleinstellung.

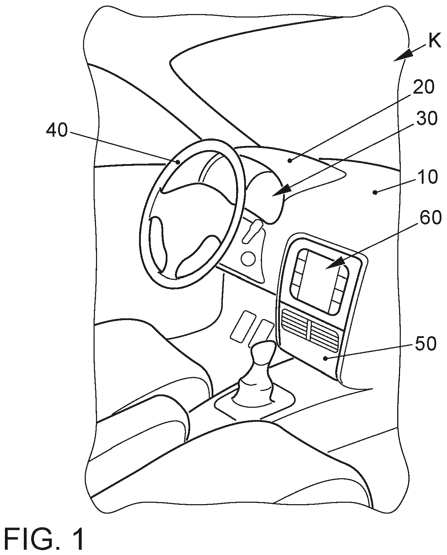

Es wird zunächst auf die Fig. 1 Bezug genommen. In dieser Figur ist ein Innenraum eines Kraftfahrzeugs K im Bereich seines Cockpits ersichtlich. So sind eine Instrumententafel 10, eine Instrumentenhutze 20 mit einem darunter befindlichen Anzeigeinstrument 30, ein Lenkrad 40, eine Mittelkonsole 50 und eine in der Mittelkonsole 50 eingebaute Eingabe- und Anzeigeeinrichtung 60 erkennbar.

Das Anzeigeinstrument 30 ist im vorliegenden Ausführungsbeispiel als sogenanntes Kombiinstrument ausgebildet. Es befindet sich unmittelbar hinter dem Lenkrad 40, also im primären Sichtbereich eines Fahrzeugsführers.

Die Eingabe- und Anzeigeeinrichtung 60 ist als sogenannter Touchscreen, also mit einer berührungsempfindlichen Anzeigefläche ausgebildet.

Das Anzeigeinstrument 30 dient zur Anzeige von für einen Fahrzeugführer wichtigen Informationselementen, welche den Fahrzeugführer über wichtige Betriebszustände des Kraftfahrzeugs K und seiner Komponenten hinweisen. Die Eingabe- und Anzeigeeinrichtung 60 dient dem Fahrzeugführer (Benutzer) zur Vornahme von Eingaben, mit deren Hilfe er gewünschte Funktionen im Kraftfahrzeug K aktivieren beziehungsweise einstellen kann. Ferner dient sie zur Anzeige von diversen Informationen.

Die Eingabe- und Anzeigeeinrichtung 60 dient im vorliegenden Ausführungsbeispiel auch zur grafischen Konfigurierung des Anzeigeinstrumentes 30, wie im Folgenden noch näher erläutert wird.

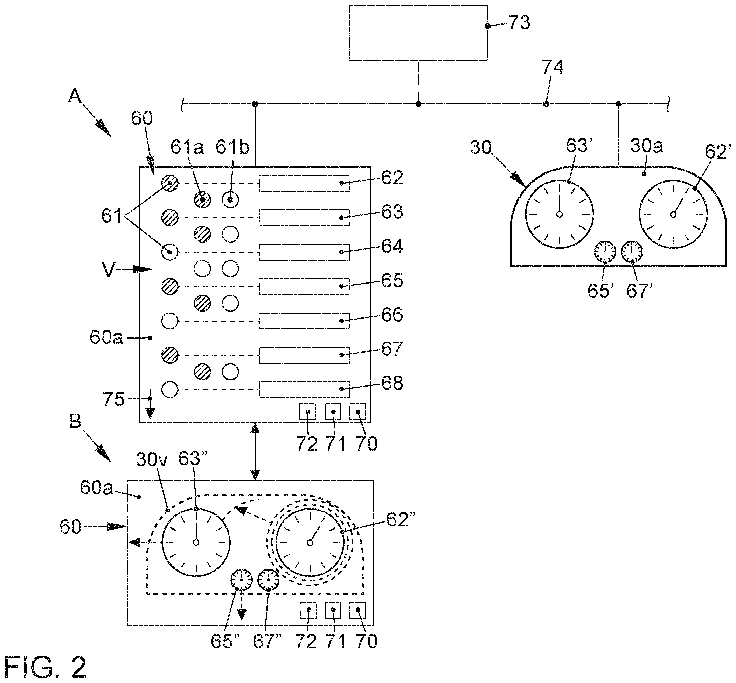

So zeigt die Fig. 2 einen Betriebszustand, in dem vom Benutzer auf der Eingabe- und Anzeigeeinrichtung 60, ausgehend von einem nicht näher dargestellten Hauptmenü, in ein Auswahlmenü zur Auswahl von bestimmten Auswahlfeldern 61 verzweigt wurde.

Über jedes Auswahlfeld 61 kann ein bestimmtes Informationselement ausgewählt werden, welches später (nach der Konfigurierung) auf einer Anzeigefläche 30a des Anzeigeinstrumentes 30 dargestellt werden soll.

Damit der Benutzer erkennen kann, welches Informationselement er durch die Auswahlfelder 61 auswählen kann, ist zu jedem Auswahlfeld 61 ein Hinweis gegeben:
So kann beispielsweise ein Hinweis 62 auf eine auswählbare Geschwindigkeitsanzeige, ein Hinweis 63 auf eine auswählbare Drehzahlanzeige, ein Hinweis 64 auf eine auswählbare Öltemperaturanzeige, ein Hinweis 65 auf eine auswählbare Kühlwassertemperaturanzeige, ein Hinweis 66 auf eine auswählbare Navigationskartendarstellung, ein Hinweis 67 auf eine auswählbare Ladezustandsanzeige einer Traktionsbatterie (nicht dargestellt) und ein Hinweis 68 auf eine auswählbare Darstellung eines AAC-Systems (Abstandsregelung) als ein Vorrat V zur Auswahl angeboten werden.

Die Auswahl ist rein beispielhaft und bei Weitem nicht als abschließend anzusehen. So kann beispielsweise ein pfeilartiger Seitenhinweis 75 vorhanden sein, der darauf hinweist, dass weitere Informationselemente beziehungsweise Auswahlfelder 61 in einer weiteren, gerade nicht sichtbaren Seite auswählbar sind. Die weiteren Auswahlfelder können beispielsweise durch eine vertikale Wischbewegung einer Hand des Benutzers sichtbar gemacht werden.

Wie bereits erwähnt, ist die Eingabe- und Anzeigeeinrichtung 60 als Touchscreen mit einer berührungsempfindlichen Anzeigefläche 60a ausgebildet. Durch Berührung der Auswahlfelder 61 kann ein Benutzer die entsprechenden, damit verknüpften Informationselemente aktivieren oder deaktivieren.

Des Weiteren sind, wo sinnvoll, Auswahlfelder 61a für eine analoge Darstellung und Auswahlfelder 61b für eine digitale Darstellung des entsprechenden Informationselementes vorhanden, mit denen festgelegt werden kann, ob eine spätere Darstellung des Informationselementes auf dem Anzeigeinstrument 30 analog (bspw. als Rundinstrument) oder digital (bspw. alphanumerisch) dargestellt werden soll.

Rechts unten auf der Anzeigefläche 60a ist ein Bestätigungsfeld 70 ersichtlich, mit der eine durch die Auswahlfelder 61 getätigte Auswahl bestätigt werden kann. Über ein Rücksprungfeld 71 kann ein Benutzer zur vorher angezeigten Anzeige (Bildschirmseite) gelangen. Die Berührung eines Hauptmenüfeldes 72 schließlich führt ihn direkt zu einem Hauptmenü (nicht dargestellt).

Die in der Figur oben links dargestellte Anzeigedarstellung soll als Anzeigedarstellung A bezeichnet werden. Von dieser kann (bei erstmaligem Aufrufen) über das Bestätigungsfeld 70 in eine Anzeigedarstellung B gewechselt werden.

In der Anzeigedarstellung B wird auf der Anzeigefläche 60a ein virtuelles Anzeigeinstrument 30v angezeigt. Das virtuelle Anzeigeinstrument 30v hat den gleichen Umriss wie das reelle Anzeigeinstrument 30 in der Instrumententafel 10. Bei Aufruf der Anzeigedarstellung B wird im virtuellen Anzeigeinstrument 30v der zuletzt gültige Zustand angezeigt, d. h. entweder ein kraftfahrzeugseitig vordefinierter Ausgangszustand oder ein zuletzt von einem Benutzer abgeänderter Zustand.

Im Ausführungsbeispiel soll davon ausgegangen werden, dass zunächst ein kraftfahrzeugseitig vordefinierter Systemzustand angezeigt wird. Dieser ist so festgelegt, dass im virtuellen Anzeigeinstrument 30v linksseitig ein als Drehzahlanzeige ausgebildetes Informationselement 63" und rechtsseitig ein als Geschwindigkeitsanzeige ausgebildetes Informationselement 62" angezeigt werden. Etwas unterhalb, zwischen den Informationselementen 62" und 63" werden ein als Kühlwassertemperaturanzeige ausgebildetes Informationselement 65" und ein als Ladezustandsanzeige für eine Traktionsbatterie ausgebildetes Informationselement 67" angezeigt. Alle Informationselemente werden als sogenannte Rundinstrumente dargestellt.

Die in der Anzeigedarstellung B gezeigten Informationselemente entsprechen dabei der in der Anzeigedarstellung A bestehenden, voreingestellten Grundeinstellung vom Kraftfahrzeug K.

Die zuletzt durchgeführte Auswahl und Einstellung von Informationselementen wird zunächst auch auf eine Anzeigefläche 30a des reellen Anzeigeinstrumentes 30 angezeigt. Die Darstellung auf dem Anzeigeinstrument 30 entspricht im Ausführungsbeispiel also auch zunächst der Anzeigedarstellung B, mit einem als Drehzahlanzeige ausgebildeten Informationselement 63', einem als Geschwindigkeitsanzeige ausgebildeten Informationselement 62', einem als Kühlwassertemperaturanzeige ausgebildeten Informationselement 65' und einem als Ladezustandsanzeige ausgebildeten Informationselement 67'.

Wie ersichtlich, sind die Eingabe- und Anzeigeeinrichtung 60 sowie das Anzeigeinstrument 30 über einen Datenbus 74 (beispielsweise CAN-Bus) mit einer Auswerte- und Steuereinrichtung 73 signaltechnisch verbunden.

Auf diese Weise kann ein Benutzer mit Hilfe der Anzeigedarstellung A und/oder B eine beliebige, freie Konfiguration der auf dem Anzeigeinstrument 30 darzustellenden Informationselemente vornehmen.

So kann er beispielsweise, ausgehend von der Voreinstellung gemäß Fig. 2 durch eine Fingerspreizgeste auf der Eingabe- und Anzeigeeinrichtung 60 das Informationselement 62" vergrößern und durch Berührung mit einem Finger und dessen Verschieben auch ein Verschieben des Informationselementes 62" wie durch den Pfeil angedeutet bewirken.

Des Weiteren ist es durch einfaches Berühren der Informationselemente und Herausverschieben aus der Anzeigefläche 60a oder aus der virtuellen Anzeigeeinrichtung 30v möglich, die Anzeige dieser Informationselemente zu deaktivieren. So ist ersichtlich, dass der Benutzer (nicht dargestellt) das Informationselement 63" nach links und das Informationselement 65" nach unten aus der Anzeigefläche 60a herausbewegt hat.

Somit ist es einem Benutzer möglich, im sogenannten WYSIWYG-Verfahren ("What you see is what you get") auf der Anzeigefläche 60a zu sehen, wie sein Anzeigeinstrument 30 nach der grafischen Konfiguration im späteren Betrieb aussehen wird.

Alternativ zum Herausbewegen der Informationselemente aus der Anzeigefläche 60a oder aus der virtuellen Anzeigeeinrichtung 30v ist es auch möglich, über das Rücksprungfeld 71 in die Anzeigedarstellung A zu wechseln und dort durch entsprechende Berührung bereits aktivierter Auswahlfelder 61 eine gewünschte Deaktivierung von Informationselementen vorzunehmen.

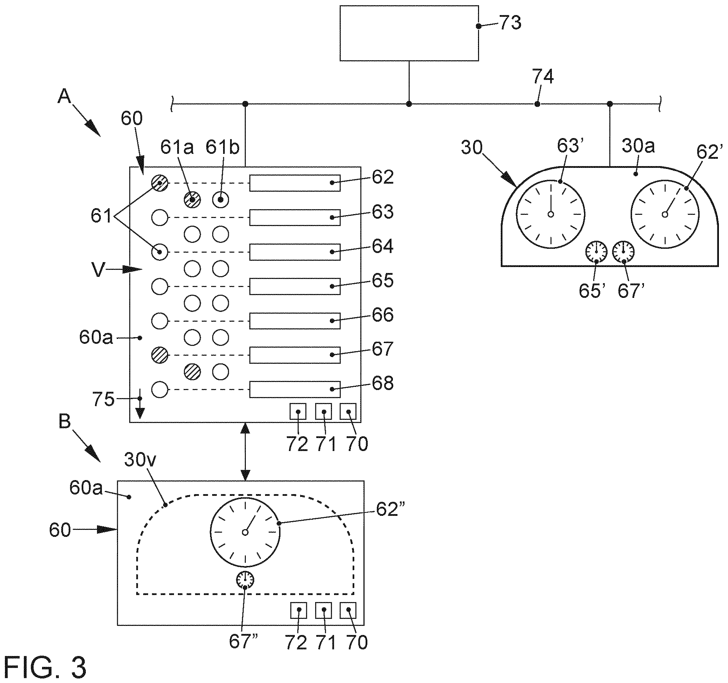

In der Fig. 3 ist ersichtlich, wie die Anzeigedarstellung B auf dem virtuellen Anzeigeinstrument 30v nach dieser ersten benutzerseitig vorgenommenen Konfiguration aussieht. Wechselt ein Benutzer aus dieser Anzeigedarstellung B über das Rücksprungfeld 71 wieder in die Anzeigestellung A, so spiegelt sich die Veränderung auch in den ausgewählten Auswahlfeldern 61 (schwarz ausgefüllt) bzw. in den nunmehr weiß belassenen Auswahlfeldern wider.

Die durchgeführte Konfiguration wird allerdings noch nicht wirksam, da der Benutzer noch nicht das Bestätigungsfeld 70 berührt hat. Auf dem Anzeigeinstrument 30 sind somit noch die im Ausgangszustand der Konfigurierung gültigen Einstellungen zu sehen.

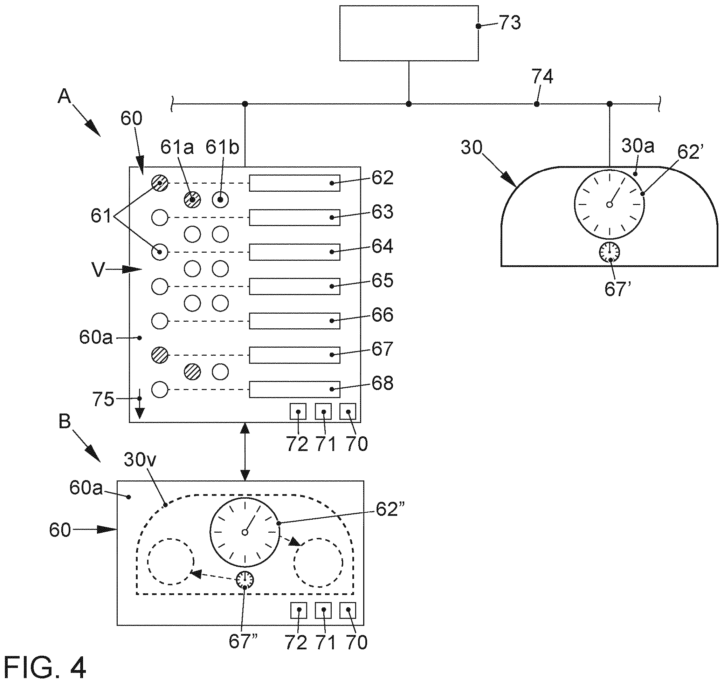

Entscheidet sich der Benutzer zur Aktivierung der vorgenommenen Konfiguration, so betätigt er das Bestätigungsfeld 70 und gelangt somit zu einem Anzeigeinstrument 30 gemäß Fig. 4. Gleichzeitig wird auf der Eingabe- und Anzeigeeinrichtung 60 in ein Hauptmenü (nicht dargestellt) gewechselt.

Ruft der Benutzer abermals die Anzeigedarstellung A zur erneuten Konfiguration seines Anzeigeinstrumentes 30 auf, so gelangt er, wie bereits erwähnt, in die zuletzt gültige Einstellung, wie sie aus der Anzeigedarstellung A der Figur 4 ersichtlich ist. Über das Bestätigungsfeld 70 gelangt er wiederum zur Anzeigedarstellung B. Aus dieser Anzeigedarstellung kann er nun beispielsweise lediglich die Größe und Position der Darstellung der Informationselemente verändern. So verkleinert er durch eine entsprechende Berührung des Informationselementes 62" und Zusammenführung der Finger das Informationselement 62" und bewegt dieses nach rechts unten auf dem virtuellen Anzeigeinstrument 30v. Das Informationselement 67" bewegt er nach links und vergrößert es durch eine entsprechende Fingergeste.

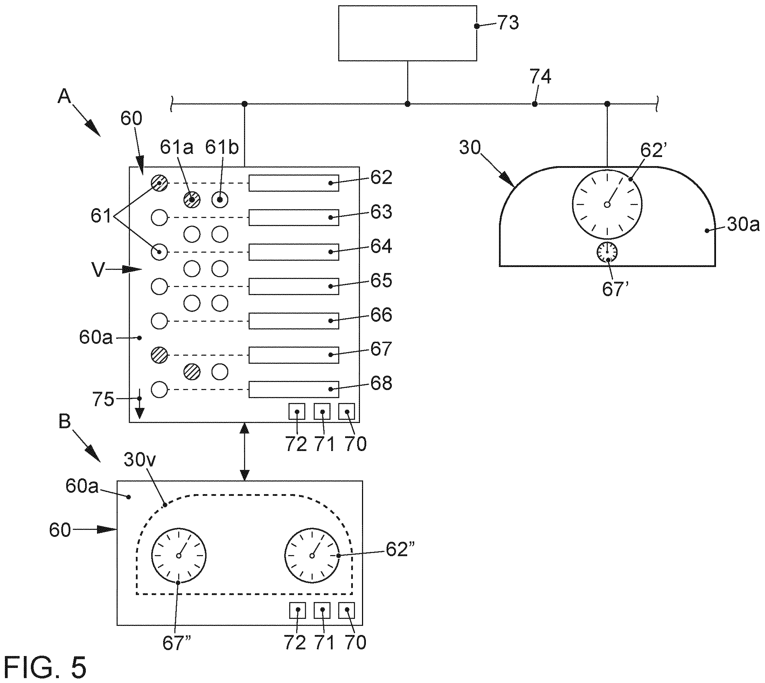

In Fig. 5 ist die durchgeführte Änderung in der Konfiguration ersichtlich. Auch in diesem Fall bleibt die alte Konfiguration des Anzeigeinstrumentes 30 solange aktiv, bis der Benutzer durch Betätigung des Bestätigungsfeldes 70 die neu durchgeführte Konfiguration bestätigt.

Nach der Bestätigung nimmt das Anzeigeinstrument 30 das Aussehen an, wie in der Fig. 5 bereits auf der Eingabe- und Anzeigeeinrichtung 60 ersichtlich.

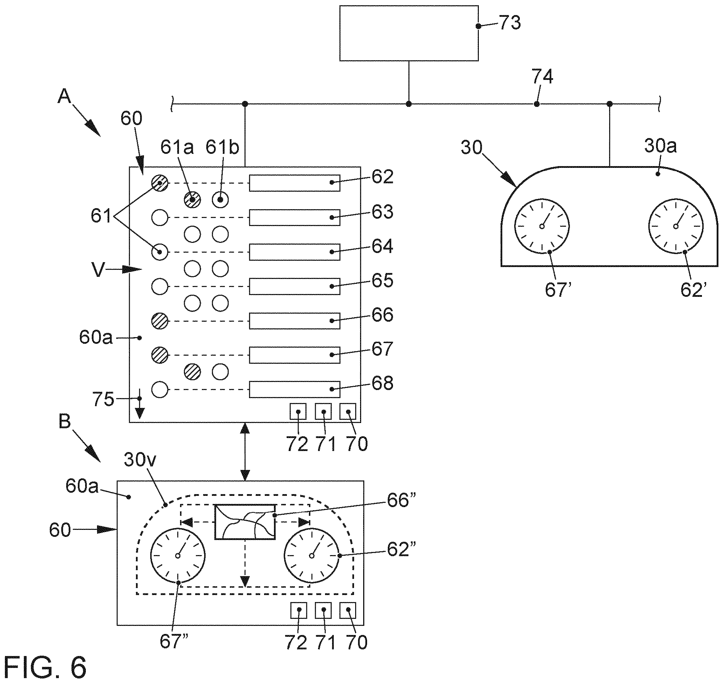

Dies ist in Fig. 6 zu sehen. In dieser Figur wird auch davon ausgegangen, dass der Benutzer nach der zuletzt durchgeführten und bestätigten Konfiguration von einem Hauptmenü wieder zurück zur Konfiguration gemäß der Anzeigedarstellung A gewechselt hat. Entschließt sich der Benutzer beispielsweise, nun auch eine Navigationskartendarstellung in sein Anzeigeinstrument 30 einzubinden, so wählt er aus dem Vorrat V auf der Anzeigedarstellung A zusätzlich auch dasjenige Auswahlfeld 61 aus, welches mit dem Hinweis 66 auf eine auswählbare Navigationskartendarstellung verknüpft ist. Nach Betätigung des Bestätigungsfeldes 70 gelangt er wiederum zur Anzeigedarstellung B, in dem auf dem virtuellen Anzeigeinstrument 30v zusätzlich zu den Informationselementen 67" und 62" nun auch ein als Navigationskartendarstellung ausgebildetes Informationselement 66" abgebildet ist.

Standardmäßig ist die Auswerte- und Steuereinrichtung 73 derart ausgebildet, dass sie ein neu hinzukommendes Informationselement so darstellt, dass dieses bereits bestehende Informationselement nicht überdeckt.

Wenn dem Benutzer die voreingestellte Darstellung des Informationselementes 66" zu klein ist, so hat er durch eine entsprechende Fingergeste nun auch die Möglichkeit das Informationselement 66" zu vergrößern. Im Ausführungsbeispiel vergrößert er das Informationselement 66" soweit, dass es die Informationselemente 62" und 67" überschneidet.

Die Auswerte- und Steuereinrichtung 73 ist so ausgebildet, dass sie die Eingabe- und Anzeigeeinrichtung 60 so ansteuert, dass das Informationselement 66" also eine Kartendarstellung grafisch gesehen immer eine Ebene unter der Darstellungsebene anderer dargestellter Informationselemente liegt.

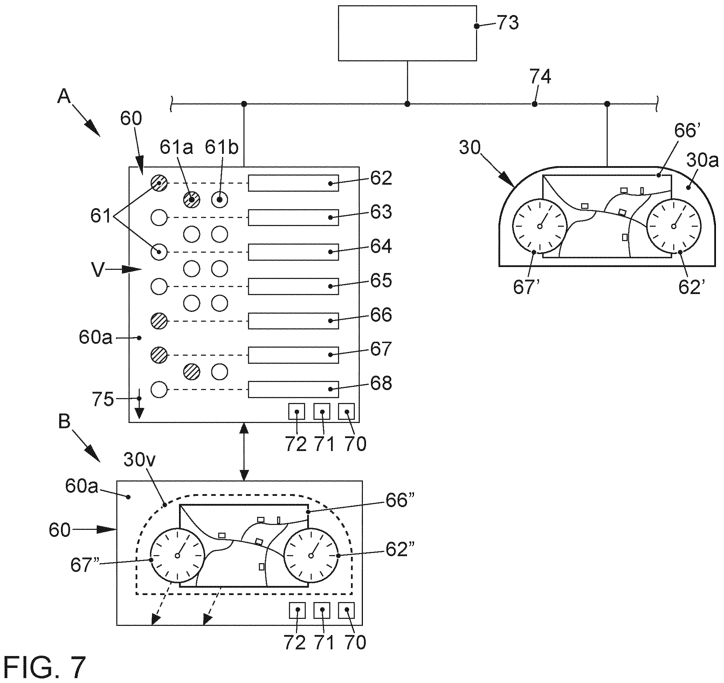

Analog zu den zuvor dargestellten Beispielen ist in der Fig. 7 dann die Anzeigedarstellung B nach der durchgeführten Änderung durch den Benutzer ersichtlich. In dieser Figur ist auch der Zustand dargestellt, den das Anzeigeinstrument 30 nach Betätigung des Bestätigungsfeldes 70 durch den Benutzer annimmt. Das Anzeigeinstrument 30 stellt also ein Abbild des virtuellen Anzeigebildes 30v dar.

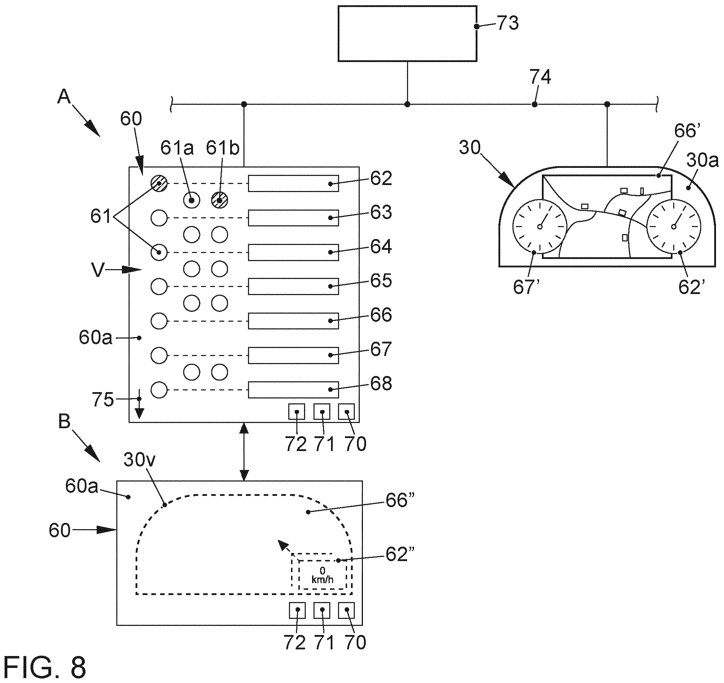

Anhand der Fig. 8 soll noch eine weitere Möglichkeit der Konfiguration des Anzeigeinstrumentes 30 durch den Benutzer beschrieben werden. Es sei hier wieder davon ausgegangen, dass der Benutzer nach der zuletzt durchgeführten Konfiguration aus einem Hauptmenü in das Konfigurationsmenü gemäß Anzeigedarstellung A gewechselt ist. Hier hat er durch abermalige Berührung der Auswahlfelder 61 die mit dem Hinweis 66 und mit dem Hinweis 67 verbunden sind, eine Deaktivierung der Informationselemente 66" und 67" durchgeführt. Weiterhin hat er durch Berührung des Auswahlfeldes 61b von einer analogen Darstellung des Informationselementes 62" in eine digitale Darstellung dieses Informationselementes gewechselt. Schließlich hat er durch eine Fingergeste das Informationselement 62" vergrößert und zentral auf dem virtuellen Anzeigeinstrument 30v positioniert.

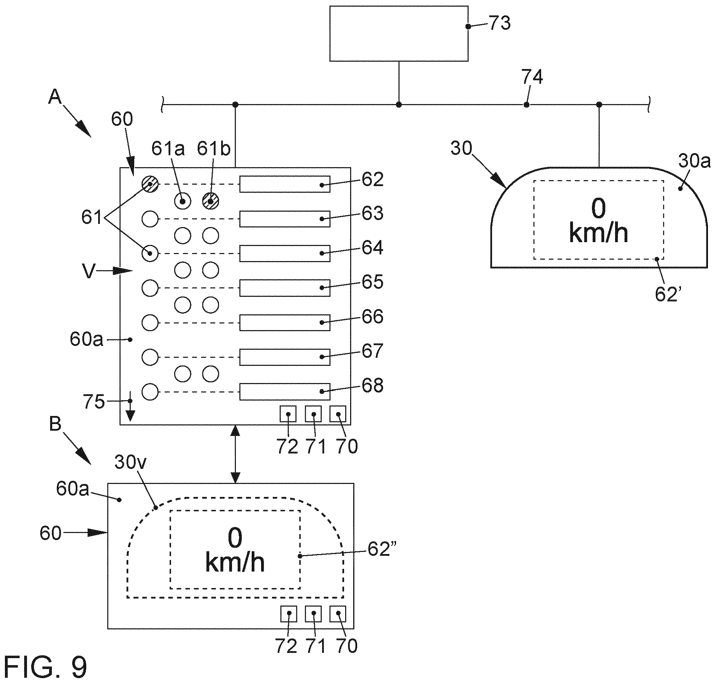

In der Fig. 9 ist zu sehen, wie die Anzeigedarstellung B auf dem virtuellen Anzeigeinstrument 30v nach dieser grafischen Konfigurierung ausschaut. Auf dem Anzeigeinstrument 30 ist die Darstellung ersichtlich, in die nach Bestätigung des Benutzers durch Berührung des Bestätigungsfeldes 70 gewechselt wird.

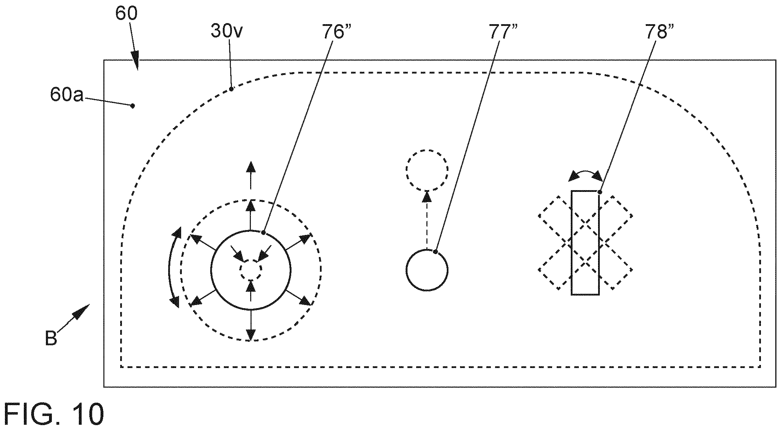

Zusammenfassend sollen in Fig. 10 noch einmal die Möglichkeiten der grafischen Konfigurierung kurz erläutert werden. So wurden nicht näher erläuterte Informationselemente 76", 77" und 78" zuvor aus dem Vorrat V gemäß Anzeigedarstellung A ausgewählt. Anschließend kann der Benutzer jedes der Informationselemente 76", 77" und 78" nach eigenem Belieben auf der Anzeigefläche 60a, also auf dem virtuellen Anzeigeinstrument 30v und damit später auch auf der Anzeigefläche 30a des reellen Anzeigeinstrumentes 30 in seiner einzunehmenden Darstellungsposition, seiner Darstellungsgröße und/oder seiner Darstellungsausrichtung benutzerseitig frei festlegen. Dies ist durch die Pfeile beziehungsweise gestrichelten Positionen der Informationselemente angedeutet.

Es ist also ersichtlich, dass ein Benutzer vollkommen frei und flexibel eine grafische Konfigurierung des Anzeigeinstrumentes 30 vornehmen kann. Es ist allerdings denkbar, dass als kraftfahrzeugseitige Voreinstellung stets eine Auswahl des als Geschwindigkeitsanzeige ausgewählten Informationselementes 62' beziehungsweise 62" notwendig ist und ein Wechsel von der Anzeigedarstellung A in die Anzeigestellung B nur dann möglich ist, wenn zumindest eine Aktivierung des mit dem Hinweis 62 verknüpften Auswahlfeldes 61 erfolgte. Im Ergebnis kann dies auch dadurch bewerkstelligt werden, dass die Auswahl des entsprechenden Auswahlfeldes 61 voreingestellt und nicht deaktivierbar (bspw. grau hinterlegt) ist. Lediglich eine Auswahl zwischen analoger und digitaler Darstellung ist dann möglich. Analog wird es dann auch nicht möglich sein, das Informationselement 62" in der Anzeigedarstellung B aus der Anzeigefläche 60a oder aus dem virtuellen Anzeigeinstrument 30v herauszubewegen, um dieses zu deaktivieren.

Zusätzlich ist es auch noch denkbar, eine kraftfahrzeugseitig festgelegte Darstellungsgröße für das Informationselement 62' bzw. 62" in der Auswerte- und Steuereinrichtung 73 zu hinterlegen, die nicht unterschritten werden darf. Hierdurch kann sichergestellt werden, dass die wichtige Information einer Geschwindigkeitsanzeige immer ausreichend gut von einem Fahrzeugführer lesbar ist.

### Bezugszeichenliste

- 10: Instrumententafel
- 20: Instrumentenhutze
- 30: Anzeigeinstrument, Kombiinstrument
- 30a: Anzeigefläche
- 30v: virtuelles Anzeigeinstrument
- 40: Lenkrad
- 50: Mittelkonsole
- 60: Eingabe- und Anzeigeeinrichtung (Touchscreen)
- 60a: berührungsempfindliche Anzeigefläche
- 61: Auswahlfelder
- 61a: Auswahlfeld für analoge Darstellung
- 61b: Auswahlfeld für digitale Darstellung
- 62: Hinweis auf auswählbare Geschwindigkeitsanzeige
- 62`: Informationselement auf Anzeigeinstrument (Geschwindigkeitsanzeige)
- 62": Informationselement auf Eingabe- und Anzeigeeinrichtung (Geschwindigkeitsanzeige)
- 63: Hinweis auf auswählbare Drehzahlanzeige
- 63': Informationselement auf Anzeigeinstrument (Drehzahlanzeige)
- 63": Informationselement auf Eingabe- und Anzeigeeinrichtung (Drehzahlanzeige)
- 64: Hinweis auf auswählbare Öltemperaturanzeige
- 65: Hinweis auf auswählbare Kühlwassertemperaturanzeige
- 65`: Informationselement auf Anzeigeinstrument (Kühlwassertemperaturanzeige)
- 65": Informationselement auf Eingabe- und Anzeigeeinrichtung (Kühlwassertemperaturanzeige)
- 66: Hinweis auf auswählbare Navigationskartendarstellung
- 66': Informationselement auf Anzeigeinstrument (Navigationskartendarstellung)
- 66": Informationselement auf Eingabe- und Anzeigeeinrichtung (Navigationskartendarstellung)
- 67: Hinweis auf auswählbare Ladezustandsanzeige einer Traktionsbatterie
- 67': Informationselement auf Anzeigeinstrument (Ladezustandsanzeige)
- 67": Informationselement auf Eingabe- und Anzeigeeinrichtung (Ladezustandsanzeige)
- 68: Hinweis auf auswählbare Darstellung eines AAC-Systems
- 69: Hinweis auf auswählbare Darstellung eines Spurhalteassistenten
- 70: Bestätigungsfeld
- 71: Rückprungfeld
- 72: Hauptmenüfeld
- 73: Auswerte- und Steuereinrichtung
- 74: Datenbus
- 75: Seitenhinweis
- 76": Informationselement auf Eingabe- und Anzeigeeinrichtung
- 77": Informationselement auf Eingabe- und Anzeigeeinrichtung
- 78": Informationselement auf Eingabe- und Anzeigeeinrichtung

- A: Ausrichtung
- K: Kraftfahrzeug
- V: Vorrat (Auswahlmenü)

## Patentansprüche

1. Verfahren zur grafischen Konfigurierung eines Anzeigeinstrumentes (30) in einem Kraftfahrzeug (K), wobei benutzerseitig wenigstens ein auf einer Anzeigefläche (30a) des Anzeigeinstrumentes (30) darzustellendes Informationselement (62', 63', 65', 66', 67`) mittels einer Eingabe- und Anzeigeeinrichtung (60) aus einem Vorrat (V) von Informationselementen ausgewählt und auf der Anzeigefläche (30a) des Anzeigeinstrumentes (30) aufgrund der Auswahl dargestellt wird, wobei nach der Auswahl des wenigstens einen Informationselementes (62', 63', 65', 66', 67') dessen auf der Anzeigefläche (30a) einzunehmende Darstellungsposition, dessen Darstellungsgröße und/oder dessen Darstellungsausrichtung benutzerseitig frei festgelegt werden, **dadurch gekennzeichnet, dass** kraftfahrzeugseitig überprüft wird, ob wenigstens ein bestimmtes, kraftfahrzeugseitig festgelegtes Informationselement (62`) zur Darstellung ausgewählt wurde und bei einer fehlenden Auswahl des bestimmten Informationselementes (62') auf die Notwendigkeit zur Auswahl des bestimmten Informationselementes (62') hingewiesen wird, wobei eine Darstellung der ausgewählten Informationselemente (62', 63', 65', 66', 67`) erst dann erfolgt, wenn zumindest auch eine Auswahl des bestimmten, festgelegten Informationselementes (62') getroffen wurde.

2. Verfahren nach Anspruch 1, **dadurch gekennzeichnet, dass** kraftfahrzeugseitig überprüft wird, ob eine benutzerseitig festgelegte Darstellungsgröße des bestimmten Informationselementes (62`) eine bestimmte, kraftfahrzeugseitig festgelegte Darstellungsgröße unterschreitet und bei einer Unterschreitung der bestimmten Darstellungsgröße auf die Notwendigkeit zur Einhaltung zumindest der bestimmten Darstellungsgröße des Informationselementes (62') hingewiesen wird, wobei eine Darstellung der ausgewählten Informationselemente (62', 63', 65', 66', 67`) erst dann erfolgt, wenn die benutzerseitig festgelegte Darstellungsgröße des bestimmten, kraftfahrzeugseitig festgelegten Informationselementes (62`) der bestimmten, kraftfahrzeugseitig festgelegten Darstellungsgröße entspricht oder größer als diese ist.

3. Verfahren nach einem der vorhergehenden Ansprüche, **dadurch gekennzeichnet, dass** kraftfahrzeugseitig eine am Steuer des Kraftfahrzeugs (K) sitzende Person erkannt wird und geprüft wird, ob der Person eine bestimmte, abgespeicherte Konfiguration des Anzeigeinstrumentes (30) zugeordnet ist, wobei eine bestehende, der Person zugeordnete Konfiguration des Anzeigeinstrumentes (30) als Anfangskonfiguration aktiviert wird.

4. Kraftfahrzeug (K) zur Durchführung des Verfahrens, umfassend ein Anzeigeinstrument (30) mit einer Anzeigefläche (30a), welche zur Anzeige wenigstens eines Informationselementes (62', 63', 65', 66', 67`) ausgebildet ist, ferner mit wenigstens einer Auswerte- und Steuereinrichtung (73) und wenigstens einer Eingabe- und Anzeigeeinrichtung (60), wobei die Auswerte- und Steuereinrichtung (73) dazu ausgebildet ist, die Eingabe- und Anzeigeeinrichtung (60) derart anzusteuern, dass auf einer der Eingabe- und Anzeigeeinrichtung (60) zugeordneten Anzeigefläche (60a) ein Vorrat (V) von Informationselementen angezeigt wird, aus dem ein oder mehrere Informationselemente auswählbar sind, wobei die Auswerte- und Steuereinrichtung (73) ferner dazu ausgebildet ist, eine Darstellung eines jeden ausgewählten Informationselementes (62', 63', 65', 66', 67') auf der Anzeigefläche (30a) des Anzeigeinstrumentes (30) zu veranlassen, wobei dessen Darstellungsposition, dessen Darstellungsgröße und/oder dessen Darstellungsausrichtung auf der Anzeigefläche (30a) mit Hilfe der Eingabe- und Anzeigeeinrichtung (60) benutzerseitig frei festlegbar sind, **dadurch gekennzeichnet, dass** die Auswerte- und Steuereinrichtung (73) dazu ausgebildet ist, zu überprüfen, ob wenigstens ein bestimmtes, kraftfahrzeugseitig festgelegtes Informationselement (62') ausgewählt wurde, wobei die Auswerte- und Steuereinrichtung (73) ferner dazu ausgebildet ist, bei einer fehlenden Auswahl des bestimmten Informationselementes (62') über eine Ausgabeeinrichtung die Ausgabe einer Fehlermeldung zu veranlassen, welche auf die Notwendigkeit zur Auswahl des bestimmten Informationselementes (62') hinweist, wobei die Auswerte- und Steuereinrichtung (73) ferner dazu ausgebildet ist, eine Darstellung von ausgewählten Informationselementen (62', 63', 65', 66', 67') auf der Anzeigefläche (30a) nur dann zu veranlassen, wenn zumindest auch eine Auswahl des bestimmten, kraftfahrzeugseitig festgelegten Informationselementes (62') erfolgte.

5. Kraftfahrzeug (K) nach Anspruch 4, **dadurch gekennzeichnet, dass** die Auswerte- und Steuereinrichtung (73) dazu ausgebildet ist, zu überprüfen, ob eine benutzerseitig festgelegte Darstellungsgröße des bestimmten, kraftfahrzeugseitig festgelegten Informationselementes (62`) eine bestimmte, kraftfahrzeugseitig festgelegte Darstellungsgröße unterschreitet und dazu ausgebildet ist, bei einer Unterschreitung der bestimmten, kraftfahrzeugseitig festgelegten Darstellungsgröße eine Ausgabevorrichtung derart anzusteuern, dass diese auf die Notwendigkeit zur Einhaltung zumindest der bestimmten, kraftfahrzeugseitig festgelegten Darstellungsgröße des Informationselementes (62') hinweist, wobei ferner die Auswerte- und Steuereinrichtung (73) dazu ausgebildet ist, eine Darstellung der ausgewählten Informationselemente (62', 63', 65', 66', 67') auf der Anzeigefläche (30a) nur dann zu veranlassen, wenn die benutzerseitig festgelegte Darstellungsgröße des bestimmten, kraftfahrzeugseitig festgelegten Informationselementes (62`) der bestimmten, kraftfahrzeugseitig festgelegten Darstellungsgröße entspricht oder größer als diese ist.

6. Kraftfahrzeug (K) nach Anspruch 4 oder 5, **dadurch gekennzeichnet, dass** das bestimmte, kraftfahrzeugseitig festgelegte Informationselement (62') eine Geschwindigkeitsanzeige ist.

7. Kraftfahrzeug (K) nach einem der Ansprüche 4 bis 6, **dadurch gekennzeichnet, dass** das Anzeigeinstrument (30) als in einer Instrumententafel (10) angeordnetes Kombiinstrument ausgebildet ist.

## Claims

1. Method for graphically configuring a display instrument (30) in a motor vehicle (K), wherein at least one information element (62', 63', 65', 66', 67') to be presented on a display surface (30a) of the display instrument (30) is selected by the user from a stock (V) of information elements by means of an input and display device (60) and is presented on the display surface (30a) of the display instrument (30) on the basis of the selection, wherein, after the at least one information element (62', 63', 65', 66', 67') has been selected, its presentation position to be assumed on the display surface (30a), its presentation size and/or its presentation orientation is/are freely defined by the user, **characterized in that** the motor vehicle checks whether at least one particular, motor vehicle-defined information element (62') has been selected for presentation and, if the particular information element (62') has not been selected, the need to select the particular information element (62') is indicated, wherein the selected information elements (62', 63', 65', 66', 67') are presented only when at least the particular, defined information element (62') has also been selected.

2. Method according to Claim 1, **characterized in that** the motor vehicle checks whether a user-defined presentation size of the particular information element (62') undershoots a particular, motor vehicle-defined presentation size and, if the particular presentation size is undershot, the need to comply at least with the determined presentation size of the information element (62') is indicated, wherein the selected information elements (62', 63', 65', 66', 67') are presented only when the user-defined presentation size of the particular, motor vehicle-defined information element (62') corresponds to or is greater than the determined, motor vehicle-defined presentation size.

3. Method according to one of the preceding claims, **characterized in that** a person sitting at the wheel of the motor vehicle (K) is detected by the motor vehicle and a check is carried out in order to determine whether a particular stored configuration of the display instrument (30) is assigned to the person, wherein an existing configuration of the display instrument (30) assigned to the person is activated as the initial configuration.

4. Motor vehicle (K) for carrying out the method, comprising a display instrument (30) having a display surface (30a) that is designed to display at least one information element (62', 63', 65', 66', 67'), also having at least one evaluation and control device (73) and at least one input and display device (60), wherein the evaluation and control device (73) is designed to control the input and display device (60) in such a manner that a stock (V) of information elements is displayed on a display surface (60a) assigned to the input and display device (60), from which one or more information elements can be selected, wherein the evaluation and control device (73) is also designed to cause each selected information element (62', 63', 65', 66', 67') to be presented on the display surface (30a) of the display instrument (30), wherein its presentation position, its presentation size and/or its presentation orientation on the display surface (30a) can be freely defined by the user with the aid of the input and display device (60), **characterized in that** the evaluation and control device (73) is designed to check whether at least one particular, motor vehicle-defined information element (62') has been selected, wherein the evaluation and control device (73) is also designed, when the particular information element (62') has not been selected, to cause an error message indicating the need to select the particular information element (62') to be output via an output device, wherein the evaluation and control device (73) is also designed to cause selected information elements (62', 63', 65', 66', 67') to be presented on the display surface (30a) only when at least the particular, motor vehicle-defined information element (62') has also been selected.

5. Motor vehicle (K) according to Claim 4, **characterized in that** the evaluation and control device (73) is designed to check whether a user-defined presentation size of the particular, motor vehicle-defined information element (62') undershoots a particular, motor vehicle-defined presentation size and is designed, if the particular, motor vehicle-defined presentation size is undershot, to control an output apparatus in such a manner that it indicates the need to comply with at least the particular, motor vehicle-defined presentation size of the information element (62'), wherein the evaluation and control device (73) is also designed to cause the selected information elements (62', 63', 65', 66', 67') to be presented on the display surface (30a) only when the user-defined presentation size of the particular, motor vehicle-defined information element (62') corresponds to or is greater than the particular, motor vehicle-defined presentation size.

6. Motor vehicle (K) according to Claim 4 or 5, **characterized in that** the particular, motor vehicle-defined information element (62') is a speed display.

7. Motor vehicle (K) according to one of Claims 4 to 6, **characterized in that** the display instrument (30) is in the form of a combination instrument arranged in a dashboard (10).

## Revendications

1. Procédé de configuration graphique d'un instrument d'affichage (30) dans un véhicule automobile (K), au moins un élément d'information (62', 63', 65', 66', 67') à représenter sur une surface d'affichage (30a) de l'instrument d'affichage (30) état sélectionné du côté de l'utilisateur à partir d'une réserve (V) d'éléments d'information au moyen d'un dispositif de saisie et d'affichage (60) et représenté sur la surface d'affichage (30a) de l'instrument d'affichage (30) sur la base de la sélection, après la sélection de l'au moins un élément d'information (62', 63', 65', 66', 67'), sa position de représentation à adopter sur la surface d'affichage (30a), sa grandeur de représentation et/ou son orientation de représentation étant spécifiées librement du côté de l'utilisateur, **caractérisé en ce qu'**un contrôle est effectué du côté du véhicule automobile afin de vérifier si au moins un élément d'information (62') déterminé, spécifié du côté du véhicule automobile, a été sélectionné et, dans le cas d'une absence de sélection de l'élément d'information (62') déterminé, la nécessité de sélectionner l'élément d'information (62') déterminé est signalée, une représentation des éléments d'information (62', 63', 65', 66', 67') sélectionnés n'ayant lieu que lorsqu'au moins aussi une sélection de l'élément d'information (62') déterminé spécifié a été effectuée.

2. Procédé selon la revendication 1, **caractérisé en ce qu'**un contrôle est effectué du côté du véhicule automobile afin de vérifier si une grandeur de représentation spécifiée du côté de l'utilisateur de l'élément d'information (62') déterminé devient inférieure à une grandeur de représentation déterminée, spécifiée du côté du véhicule automobile et, dans le cas d'une infériorité à la grandeur de représentation déterminée, la nécessité de respecter au moins la grandeur de représentation déterminée de l'élément d'information (62') est signalée, une représentation des éléments d'information (62', 63', 65', 66', 67') sélectionnés n'ayant lieu que lorsque la grandeur de représentation spécifiée du côté de l'utilisateur de l'élément d'information (62') déterminé, spécifié du côté du véhicule automobile, correspond à la grandeur de représentation déterminée, spécifiée du côté du véhicule automobile, ou est supérieure à celle-ci.

3. Procédé selon l'une des revendications précédentes, **caractérisé en ce qu'**une personne assise à la commande du véhicule automobile (K) est reconnue du côté du véhicule automobile et un contrôle est effectué afin de vérifier si une configuration déterminée mémorisée de l'instrument d'affichage (30) est associée à la personne, une configuration existante, associée à la personne de l'instrument d'affichage (30) étant activée en tant que configuration de départ.

4. Véhicule automobile (K) destiné à mettre en œuvre le procédé, comprenant un instrument d'affichage (30) pourvu d'une surface d'affichage (30a), laquelle est configurée pour l'affichage d'au moins un élément d'information (62', 63', 65', 66', 67'), comprenant en outre au moins un dispositif d'interprétation et de commande (73) et au moins un dispositif de saisie et d'affichage (60), le dispositif d'interprétation et de commande (73) étant configuré pour commander le dispositif de saisie et d'affichage (60) de telle sorte que sur une surface d'affichage (60a) associée au dispositif de saisie et d'affichage (60) est affichée une réserve (V) d'éléments d'information, à partir de laquelle peuvent être sélectionnés un ou plusieurs éléments d'information, le dispositif d'interprétation et de commande (73) étant en outre configuré pour provoquer un affichage d'un élément d'information (62', 63', 65', 66', 67') sélectionné respectif sur la surface d'affichage (30a) de l'instrument d'affichage (30), sa position de représentation, sa grandeur de représentation et/ou son orientation de représentation sur la surface d'affichage (30a) pouvant être spécifiées librement du côté de l'utilisateur à l'aide du dispositif d'interprétation et de commande (60), **caractérisé en ce que** le dispositif d'interprétation et de commande (73) est configuré pour vérifier si au moins un élément d'information (62') déterminé, spécifié du côté du véhicule automobile, a été sélectionné, le dispositif d'interprétation et de commande (73) étant en outre configuré pour, dans le cas d'une absence de sélection de l'élément d'information (62') déterminé, provoquer l'émission d'un message d'erreur par le biais d'un dispositif d'émission, lequel signale la nécessité de sélectionner l'élément d'information (62') déterminé, le dispositif d'interprétation et de commande (73) étant en outre configuré pour ne provoquer une représentation des éléments d'information (62', 63', 65', 66', 67') sélectionnés sur la surface d'affichage (30a) que lorsqu'au moins aussi une sélection de l'élément d'information (62') déterminé spécifié du côté du véhicule, a été effectuée.

5. Véhicule automobile (K) selon la revendication 4, **caractérisé en ce que** le dispositif d'interprétation et de commande (73) est configuré pour vérifier si une grandeur de représentation spécifiée du côté de l'utilisateur de l'élément d'information (62') déterminé spécifié du côté du véhicule automobile devient inférieure à une grandeur de représentation déterminée, spécifiée du côté du véhicule automobile, et est configuré pour, dans le cas d'une infériorité à la grandeur de représentation déterminée, spécifiée du côté du véhicule automobile, commander un arrangement d'émission de telle sorte que celui-ci signale la nécessité de respecter au moins la grandeur de représentation déterminée, spécifiée du côté du véhicule automobile, de l'élément d'information (62'), le dispositif d'interprétation et de commande (73) étant en outre configuré pour ne provoquer une représentation des éléments d'information (62', 63', 65', 66', 67') sélectionnés sur la surface d'affichage (30a) que lorsque la grandeur de représentation spécifiée du côté de l'utilisateur de l'élément d'information (62') déterminé, spécifié du côté du véhicule automobile, correspond à la grandeur de représentation déterminée, spécifiée du côté du véhicule automobile, ou est supérieure à celle-ci.

6. Véhicule automobile (K) selon la revendication 4 ou 5, **caractérisé en ce que** l'élément d'information (62') déterminé, spécifié du côté du véhicule automobile, est une indication de vitesse.

7. Véhicule automobile (K) selon l'une des revendications 4 à 6, **caractérisé en ce que** l'instrument d'affichage (30) est réalisé sous la forme d'un instrument combiné disposé dans un tableau de bord (10).
